(19) Europäisches Patentamt
European Patent Office
Office européen des brevets

(11) EP 1 860 638 A1

(12) EUROPEAN PATENT APPLICATION

(43) Date of publication:
28.11.2007 Bulletin 2007/48

(51) Int Cl.:
G09G 3/36 (2006.01)

(21) Application number: 07008987.5

(22) Date of filing: 04.05.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 24.05.2006 KR 20060046645

(71) Applicant: Samsung Electronics Co., Ltd.
Yeongtong-gu
Suwon-city, Gyeonggi-do 442-742 (KR)

(72) Inventors:
• Yang, Young-chol
Seongnam-si
Gyeonggi-do (KR)

• Choi, Jeong-ye
Suji-gu
Yongin-si
Gyeonggi-do (KR)
• Han, Mi-jung
Giheung-gu
Yongin-si
Gyeonggi-do (KR)

(74) Representative: Weitzel, Wolfgang
Patentanwalt
Friedenstrasse 10
89522 Heidenheim (DE)

(54) **Liquid crystal display and control method of the same**

(57) A liquid crystal display including a liquid crystal panel, a temperature sensor sensing a temperature of the liquid crystal panel, a gray scale voltage generating part including a plurality of gray scale voltage generating units each generating a first gray scale voltage set corresponding to a preset temperature and a controller generating a second gray scale voltage set corresponding to the sensed temperature using the first gray scale voltage sets when the sensed temperature does not correspond to the preset temperature.

FIG. 1

**Description**

BACKGROUND OF THE INVENTION

Field of the Invention

The present invention relates to a liquid crystal display and a control method of the same, and more particularly, to a liquid crystal display which generates a plurality of gray-scale voltages and a control method of the same.

Description of the Related Art

A liquid crystal display ("LCD") includes an LCD panel having a thin film transistor ("TFT") substrate where TFTs are formed, a color filter substrate where color filter layers are formed, and a liquid crystal layer disposed between two substrates.

An arrangement of liquid crystal molecules in the liquid crystal layer varies depending on voltage applied to the TFTs, by which transmittance of light is affected. In other words, the LCD displays desired images, with the liquid crystal molecules arranged where the transmittance of light is adjusted.

The liquid crystal molecules have different characteristics according to temperature. Particularly, dielectric anisotropy ($\Delta\varepsilon$), modulus of elasticity (k) and refractive index anisotropy ($\Delta$n) of the liquid crystal molecules drastically vary at critical temperatures where characteristics of the liquid crystal molecules vary. Variation of the liquid crystal molecules affects the transmittance of light, and accordingly the images may not be displayed on a display panel normally.

Thus, it is necessary to generate gray scale voltages different according to temperature of the liquid crystal molecules and transmittance owing to the temperature.

BRIEF SUMMARY OF THE INVENTION

An exemplary embodiment provides an LCD and a control method thereof, generating a suitable gray scale voltage for temperature.

An exemplary embodiment provides a liquid crystal display including a liquid crystal panel, a temperature sensor sensing a temperature T of the liquid crystal panel, a gray scale voltage generating part including a plurality of gray scale voltage generating units each generating a first gray scale voltage set corresponding to a preset temperature and a controller generating a second gray scale voltage set corresponding to the sensed temperature T using the first gray scale voltage sets when the sensed temperature T does not correspond to the preset temperature.

In an exemplary embodiment, the gray scale voltage generating part further includes an N number of the gray scale voltage generating units corresponding to a first temperature $T_1$ through an N-th temperature $T_N$, respectively, and each of the first gray scale voltage sets include a plurality of gray scale voltages. When a temperature $T_i$ is in a range between the first temperature $T_1$ and the N-th temperature $T_N$, and the sensed temperature T satisfies $T_i < T < T_{i+1}$, the controller calculates a k-th gray scale voltage V(k, T) corresponding to the temperature T by the following equation:

$$V(k,T) = V(k,T_i) + \frac{V(k,T_{i+1}) - V(k,T_i)}{T_{i+1} - T_i}\left(T - T_i\right)$$

where V(k, Ti+1) is a k-th gray scale voltage corresponding to the temperature Ti+1 and V(k, Ti) is a k-th gray scale voltage corresponding to the temperature Ti.

In an exemplary embodiment, the controller outputs the second gray scale voltage set corresponding to the first temperature $T_1$ when the sensed temperature T satisfies $T < T_1$.

In an exemplary embodiment, the controller outputs the second gray scale voltage set corresponding to the N-th temperature $T_N$ when the sensed temperature T satisfies $T > T_N$.

In an exemplary embodiment, the gray scale voltage generating units each include a variable resistor logic part used to generate the first gray scale voltage sets.

In an exemplary embodiment, the liquid crystal display further includes a data driving part generating a data voltage base on the second gray scale voltage set. The controller outputs the second gray scale voltage set corresponding to the sensed temperature T to the data driving part.

An exemplary embodiment provides a liquid crystal display including a liquid crystal panel, a temperature sensor sensing a temperature T of the liquid crystal panel, a gray scale voltage generating part including a plurality of gray scale voltage generating units each generating a gray scale voltage set corresponding to a preset temperature and a controller controlling the gray scale voltage generating part and generating the gray scale voltage set corresponding to the preset temperature which has minimum difference from the sensed temperature T when the sensed temperature does not correspond to the preset temperature.

In an exemplary embodiment, the gray scale voltage generating units each include a variable resistor logic part used to generate a plurality of gray scale voltages.

In an exemplary embodiment, the gray scale voltage generating part further includes an N number of the gray scale voltage generating units corresponding to a temperature $T_1$ through a temperature $T_N$, respectively, and the controller controls the gray scale voltage generating part and outputs the gray scale voltage set corresponding to the first temperature $T_1$ when the sensed temperature T satisfies $T < T_1$.

In an exemplary embodiment, the controller controls the gray scale voltage generating part and outputs the gray scale voltage set corresponding to the N-th temperature $T_N$) when the sensed temperature T satisfies $T > T_N$.

An exemplary embodiment provides a control method of a liquid crystal display. The control method includes generating first gray voltage sets corresponding to a first temperature $T_1$ through an N-th temperature $T_N$, respectively, sensing a temperature T of the liquid crystal panel and generating a second gray scale voltage set corresponding to the sensed temperature T using the first gray scale voltage sets when the sensed temperature T is not between the first temperature $T_1$ and the N-th temperature $T_N$.

In an exemplary embodiment, the generating first gray scale voltage sets includes generating a plurality of gray scale voltages. The generating a second gray scale voltage set includes when a temperature $T_i$ is in a range between the first temperature $T_1$ and the N-th temperature $T_N$ and the sensed temperature T satisfies $T_i < T < T_{i+1}$, calculating a k-th gray scale voltage V(k, T) corresponding to the temperature T by the following equation:

$$V(k,T) = V(k,T_i) + \frac{V(k,T_{i+1}) - V(k,T_i)}{T_{i+1} - T_i}\left(T - T_i\right)$$

where V(k, Ti+1) is a k-th gray scale voltage corresponding to the temperature Ti+1 and V(k, Ti) is a k-th gray scale voltage corresponding to the temperature Ti.

In an exemplary embodiment the second gray scale voltage set corresponds to the first temperature $T_1$ when the sensed temperature T satisfies $T < T_1$.

In an exemplary embodiment, the second gray scale voltage set corresponds to the N-th temperature $T_N$ when the sensed temperature T satisfies $T > T_N$.

An exemplary embodiment provides a control method of a liquid crystal display. The control method includes generating gray voltage sets corresponding to a first temperature $T_1$ through an N-th temperature $T_N$, respectively, sensing a temperature T of the liquid crystal panel and selecting the gray scale voltage set corresponding to a temperature between the first temperature $T_1$ and the N-th temperature $T_N$ which has minimum difference from the sensed temperature T when the sensed temperature is higher than the first temperature $T_1$ or lower than the N-th temperature $T_N$.

In an exemplary embodiment the selected gray scale voltage set corresponds to the first temperature $T_1$ when the sensed temperature T satisfies $T < T_1$.

In an exemplary embodiment the selected gray scale voltage set corresponds to the N-th temperature $T_N$ when the sensed temperature T satisfies $T > T_N$.

An exemplary embodiment provides a liquid crystal display. The liquid crystal display includes a liquid crystal panel; a temperature sensor sensing a temperature T of the liquid crystal panel; a gray scale voltage generating part comprising a plurality of gray scale voltage generating units, each generating a gray scale voltage set corresponding to a preset temperature range; and a controller controlling the gray scale voltage generating part and selecting the gray scale voltage set having the preset temperature range to which the sensed temperature corresponds.

BRIEF DESCRIPTION OF THE DRAWINGS

The above and/or other aspects and advantages of the present invention will become apparent and more readily appreciated from the following description of the exemplary embodiments, taken in conjunction with the accompanying drawings of which:

FIG. 1 is a control block diagram of a liquid crystal display according to a first exemplary embodiment of the present invention;

FIG. 2 is a control flow chart to illustrate a control method of the liquid crystal display according to the first exemplary embodiment of the present invention;

FIG. 3 is a control flow chart to illustrate a control method of a liquid crystal display according to a second exemplary embodiment of the present invention; and

FIG. 4 is a control flow chart to illustrate a control method of the liquid crystal display according to the second exemplary embodiment of the present invention.

DETAILED DESCRIPTION OF THE INVENTION

Reference will now be made in detail to exemplary embodiments of the present invention, examples of which are illustrated in the accompanying drawings, wherein like reference numerals refer to like elements throughout. The embodiments are described below in order to explain the present invention by referring to the figures.

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "connected to" another element or layer, the element or layer can be directly coupled to another element or layer or intervening elements or layers. In contrast, when an element is referred to as being "directly coupled to" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, the present invention will be described in detail with reference to the accompanying drawings.

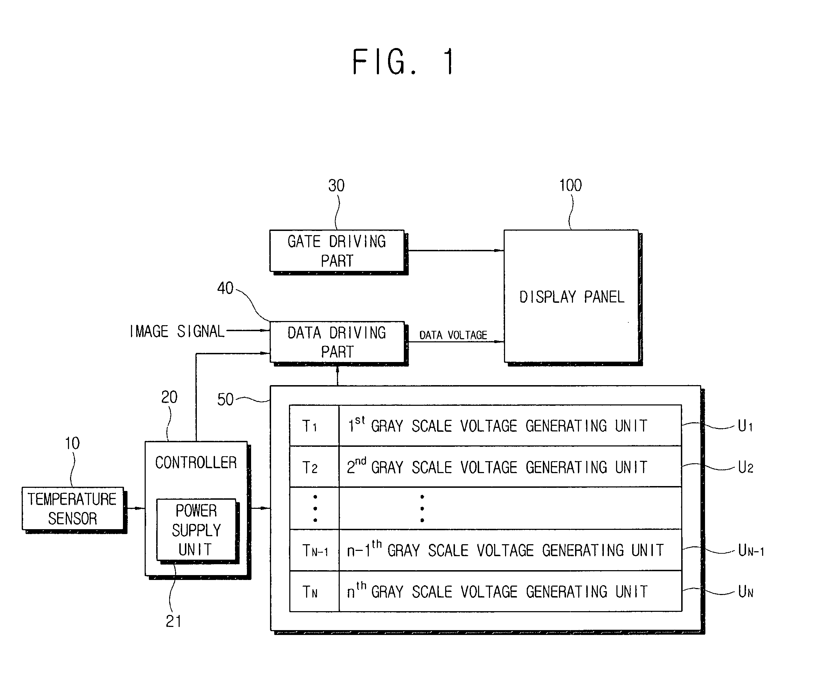

Referring to FIG. 1, an LCD according to a first exemplary embodiment includes a temperature sensor 10, an LCD panel 100, a gate driving part 30 and a data driving part 40 generating a driving voltage applied to the LCD panel 100, a gray scale voltage generating part 50 including a plurality of gray scale voltage generating units $U_1$ through $U_N$; and a controller 20 controlling the plurality of gray scale voltage generating units $U_1$ through $U_N$. The controller 20 includes a power supply unit 21.

In the first embodiment, the LCD panel 100 includes a TFT substrate where a plurality of pixels are formed, a color filter substrate where color filters are formed and a liquid crystal layer disposed therebetween.

The TFT substrate includes a plurality of pixels which are defined by a plurality of data lines and gate lines (not shown). Each pixel includes a switching element (Q) which is connected to the gate line and the data line, and a liquid crystal capacitor (Clc) and a storage capacitor (Cst) which are connected to the switching element. The plurality of gate lines extends in a row direction and transmit a gate voltage corresponding to a scanning signal or a gate signal. The plurality of data lines extend in a column direction and transmit a data voltage corresponding to an image signal. The switching element (Q) may include three terminals such as a control terminal connected to a gate line, an input terminal connected to a data line and an output terminal connected to the liquid crystal capacitor (Clc) and the storage capacitor (Cst).

In the LCD panel 100 with the aforementioned structure, when a gate on voltage is applied to the gate line so that the switching element (Q) is on, a data voltage provided to the data line is applied to a pixel electrode through the switching element (Q). Then, an electric field due to a difference between a pixel voltage applied to the pixel electrode and a common voltage is formed in the liquid crystal layer, and light passes through the liquid crystal layer having variable transmittance depending on the electric field.

The temperature sensor 10 senses the temperature of the LCD panel 100. In the illustrated embodiment, an optimal gray scale voltage is formed to correspond to a variation of liquid crystal molecules according to temperature variation. In one exemplary embodiment, is preferable to sense the temperature of the liquid crystal layer in the LCD panel 100.

The controller 20 selects a gray scale voltage set or creates a new gray scale voltage set using the power supply unit 21. The power supply unit 20 creates the new gray scale voltage set using a preset gray scale voltage established on the basis of the sensed temperature.

The gray scale voltage generating part 50 includes a plurality of gray scale voltage generating units $U_1$ through $U_N$. The gray scale voltage generating part 50 generates a plurality of gray scale voltage sets using the gray scale voltage generating units $U_1$ through $U_N$. The gray scale voltage generating units $U_1$ through $U_N$ generate different gray scale voltage sets depending on different temperatures $T_1$ through $T_N$.

The gray scale voltage is a reference voltage of an ultimate data voltage to the LCD panel 100 to display gradations. As the liquid crystal molecules are aligned variably depending on voltage, the reference voltage is necessary to linearly adjust the alignment of the liquid crystal molecules. The gray scale voltage functions as the reference voltage to realize images and has a plurality of levels to display images, such as from black to white.

Since the transmittance of the liquid crystal molecules according to voltage are variable on dielectric anisotropy ($\Delta\varepsilon$), modulus of elasticity (k) and refractive index anisotropy ($\Delta n$), it is necessary to adjust the voltage applied to the liquid crystal molecules depending on surroundings of the liquid crystal molecules. As the dielectric anisotropy and the refractive index anisotropy decrease around a certain relatively high temperature where the liquid-crystal characteristics disappear, the liquid crystal molecules are remarkably relatively slowly aligned by an electric field, thereby reducing brightness.

In the illustrated embodiment of the LCD, the gray scale voltage is variably output to the data driving part 40 according to the temperatures of the LCD panel 100, thereby realizing substantially uniform brightness.

The "gray scale voltage set" as used herein, means a gray scale voltage group corresponding to one temperature value. That is, the gray scale voltage group corresponding to one temperature value includes a plurality of gray scale voltages. The LCD of the illustrated embodiment includes a plurality of gray scale voltage sets. As used herein, corresponding may be defined as being equal to or being substantially equal (e.g., about or approximately equal).

The gray scale voltage generating part 50 includes a total of N gray scale voltage generating units $U_1$ through $U_N$. In one exemplary embodiment, the gray scale voltage generating units $U_1$ may be from a first gray scale voltage generating unit $U_1$ corresponding to a first temperature value $T_1$ to an N-th gray scale voltage generating unit $U_N$ corresponding to an N-th temperature value $T_N$. The gray scale voltage generating units $U_1$ through $U_N$ generates gray scale voltage sets different from one another according to a control of the controller 20.

In exemplary embodiments, the first temperature value $T_1$ through the N-th temperature value $T_N$ may be a specific temperature value or within a predetermined range. Alternatively, the first temperature value $T_1$ through the N-th temperature value $T_N$ may be set with various values or ranges from a user, and accordingly the gray scale voltage sets may be variable.

When each of the first temperature value $T_1$ through the N-th temperature value $T_N$ corresponds to a predetermined temperature range without a gap, for example, 0°C to 5°C , 5°C to 10°C and so on, the controller 20 may select one of the gray scale voltage generating units $U_1$ through $U_N$ having a temperature range corresponding to the sensed temperature. In this case, the power supply unit 21 of the controller 20 can be omitted.

In an exemplary embodiment, each of the gray scale voltage generating units $U_1$ through $U_N$ may include a variable resistor logic part (not shown) to generate the gray scale voltage set having the plurality of gray scale voltages. The variable resistor logic part may not use a resistor string, but instead may use a transistor logic embedded in a chip to change resistance. In one exemplary embodiment, the logic is programmed to output a resistance value according to a control signal received from the outside and to distribute and output a reference voltage according to the resistance value. Alternatively, the gray scale generating unit may include a plurality of resistor strings and/or the variable resistor logic part.

The controller 20 controls the gray scale generating units $U_1$ through $U_N$ to generate an optimal gray scale voltage set to the data driving part 40 according to the temperature of the LCD panel 100. The controller 20 selects one of the gray scale voltage generating units $U_1$ through $U_N$ according to the temperature of the LCD panel 10 and controls the selected gray scale voltage generating unit $U_x$ to generate a single gray scale voltage set. Further, the controller 20 may perform various calculations to output individual gray scale voltages directly to the data driving part 40.

The gate driving part 30 may be referred to as a scan driving part. The gate driving part 30 is connected to the gate line of the LCD panel 100 and applies a gate signal made of a combination of a gate on voltage (Von) and a gate off voltage (Voff) to the gate line.

The data driving part 40 may be referred to as a source driving part. The data driving part 40 generates a plurality of voltages to display different gradations using a gray scale voltage generated in the gray scale voltage generating part 50. The plurality of voltages from the data driving part 40 is selected according to an image signal and applied to the data line of the LCD panel 100 as an ultimate data voltage. In one exemplary embodiment, where a digital operation bit of the data driving part 40 is given as '6,' when ten gray scale voltages are applied to the data driving part 40, the data driving part 40 generates different voltages of sixty four (i.e. $2^6$), and selectively outputs the different voltages.

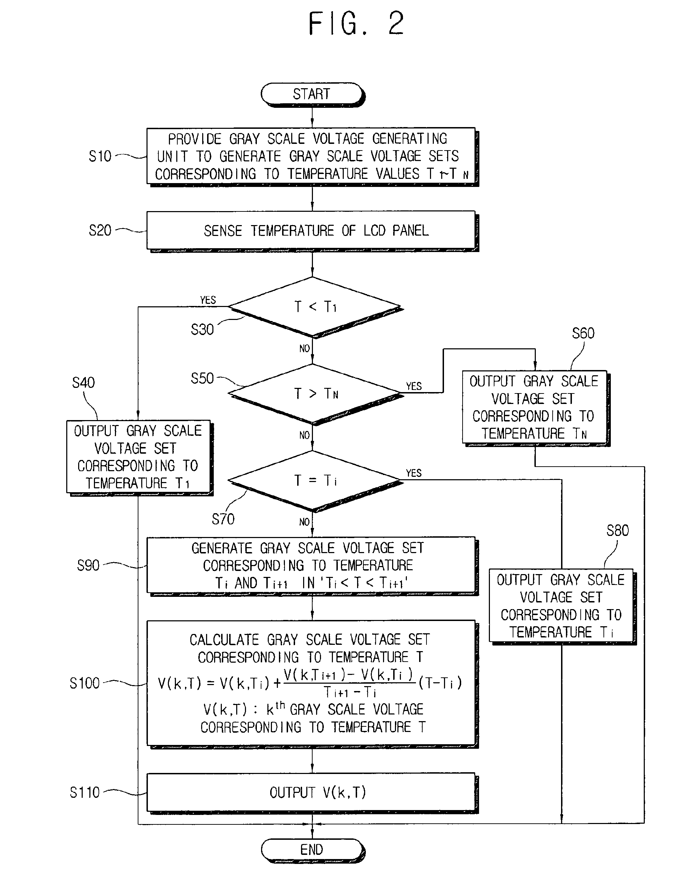

FIG. 2 is a control flow chart illustrating a control method of the LCD according to the first exemplary embodiment of the present invention.

The LCD panel 100 and an N number of gray scale voltage generating units $U_1$ through $U_N$ to generate the gray scale voltage sets corresponding to the temperature values of the first temperature value $T_1$ to the N-th temperature value $T_N$, are provided (S10). The first temperature value $T_1$ denotes a minimum temperature, and the N-th temperature value $T_N$ denotes a maximum temperature. Hereinafter, one of the first temperature value $T_1$ to the N-th temperature value $T_N$ denotes a temperature $T_i$.

An alignment of the liquid crystal molecules substantially changes relative to voltage according to temperature. Accordingly, images may deteriorate and brightness may be variable on the LCD panel 100. A critical voltage can change the characteristic of the liquid crystal molecules. A critical temperature is where the characteristics of the liquid crystal molecules significantly drastically vary. When voltage values become lower than the critical voltage at the critical temperature, originally white images may be displayed at these lower voltage values as black images. This displaying of black images causes the characteristics of the gray scale voltage to vary and a contrast ratio to deteriorate. Further, maximum transmittance decreases at a relatively high temperature, and thus the contrast ratio may significantly deteriorate.

In the illustrated embodiment, the gray scale voltage generating units $U_1$ through $U_N$ generate gray scale voltages considering a state of the liquid crystal molecules as indicated by a temperature. The gray scale voltage generating units $U_1$ through $U_N$ generate gray scale voltages under control of the controller 20 and include the variable resistor logic parts to generate the gray scale voltages.

The temperature T of the LCD panel 100 is sensed by the temperature sensor 10 (S20).

A determination is made if the temperature T of the LCD panel 100 is lower than the minimum temperature $T_1$ (S30). If the temperature T is less than the minimum temperature $T_1$, the controller 20 controls the first gray scale voltage generating unit $U_1$ to generate a gray scale voltage set corresponding to the minimum temperature $T_1$ and outputs the generated gray scale voltage set to the data driving part 40 (S40). In an exemplary embodiment, all ranges of the temperature can considered to generate an optimal gray scale voltage, but it may not be easily realized. As in the illustrated embodiment, in the operation S30, a determination is made when the LCD may be exposed out of the preset temperature range (e.g., as including the minimum temperature $T_1$).

If the sensed temperature T is not lower than the minimum temperature $T_1$, the controller 20 determines whether the sensed temperature T is higher than the maximum temperature $T_N$ (S50) . The sensed temperature T is compared with the maximum temperature $T_N$ for a same reason as described above with respect to the minimum temperature comparison. In an exemplary embodiment, all ranges of the temperature can considered to generate an optimal gray scale voltage, but it may not be easily realized. As in the illustrated embodiment, in the operation S50, a determination is made when the LCD may be exposed out of the preset temperature range (e.g., as including the maximum temperature $T_N$).

At operation S50, if the sensed temperature T is higher than the maximum temperature $T_N$, the controller 20 controls the N-th gray scale voltage generating unit $U_N$ to generate a gray scale voltage set corresponding to the maximum temperature $T_N$ and outputs the gray scale voltage set to the data driving part 40 (S60).

When the sensed temperature T is within a range between the minimum temperature $T_1$ and the maximum temperature $T_N$, the controller 20 determines whether the temperature $T_i$, equal to the sensed temperature T, is found within the range between the minimum temperature $T_1$ and the maximum temperature $T_N$.(S70).

If the temperature $T_i$ as equal to the sensed temperature T, is found within the range, the controller 20 selects a gray scale voltage generating unit $U_i$ corresponding to the temperature $T_i$ to generate a correspondent gray scale voltage set. Then, the controller 20 outputs the gray scale voltage set to the data driving part 40 (S80).

Alternatively, if the temperature $T_i$, as equal to the sensed temperature T, is not found within the range, the controller 20 detects the temperature $T_i$ and the temperature $T_{i+i}$ to correspond to '$T_i < T < T_{i+i}$' and generates gray scale voltage sets corresponding to the temperatures $T_i$ and $T_{i+i}$ (S90). In operation S90, the controller 20 prepares basic data to calculate an ultimate gray scale voltage set for the LCD panel 100. The gray scale voltage sets corresponding to the temperatures $T_i$ and $T_{i+1}$ may be generated in the gray scale voltage generating units $U_i$ and $U_{i+1}$ immediately or may

have been stored already.

In the illustrated embodiment, the controller 20 calculates a k-th gray scale voltage V(k, T) corresponding to the temperature T using a k-th gray scale voltage $V(k, T_i)$ corresponding to the temperature $T_i$ and a k-th gray scale voltage $V(k, T_{i+1})$ corresponding to the temperature $T_{i+1}$, and then finally generates a gray scale voltage set corresponding to the temperature $T_i$. The following equation is used to generate a gray scale voltage set, by which the k-th gray scale voltage V(k, T) corresponding to the temperature T is calculated (S100).

[Equation 1]

$$V(k,T) = V(k,T_i) + \frac{V(k,T_{i+1}) - V(k,T_i)}{T_{i+1} - T_i}(T - T_i)$$

Equation 1 is given to calculate the optimal gray scale voltage suitable for the temperature T as an example, and various equations and methods may be adopted for the controller 20 to calculate an optimal gray scale voltage.

The power supply unit 21 generates new gray scale voltage set based on the calculation result and outputs the new gray scale voltage set for the temperature T at operation S100 to the data driving part 40 (S110).

In an alternative exemplary embodiment, it may be determined whether the sensed temperature T of the LCD panel 100 is within the range between the temperatures $T_1$ and $T_N$ before it is determined whether the sensed temperature T is lower than the first temperature $T_1$ or higher than the N-th temperature $T_N$ because the temperature of the LCD panel 100 is often within the range of the temperatures $T_1$ through $T_i$. Thus, to relatively quickly and efficiently generate the gray scale voltage set, the determination of which range includes the sensed temperature T can be changed.

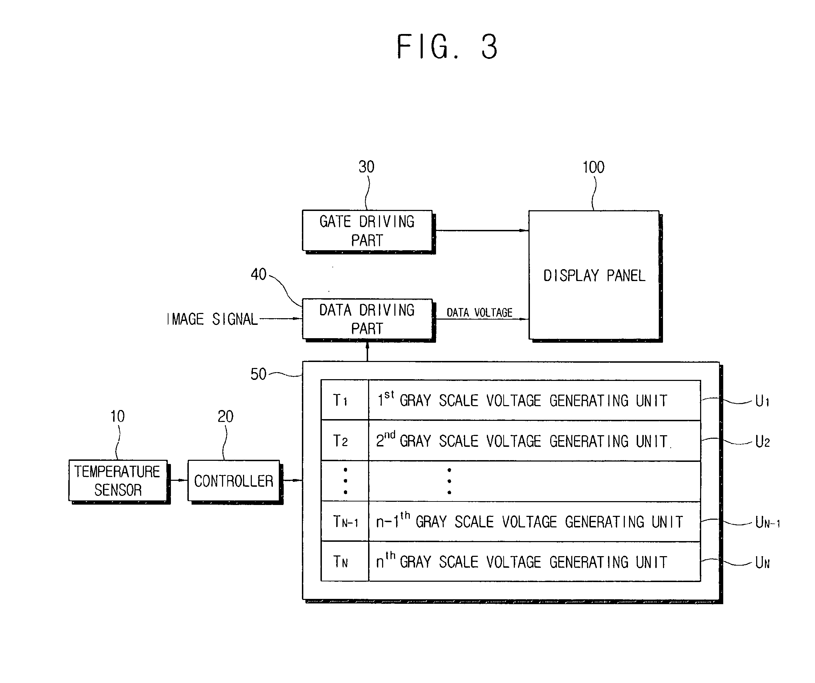

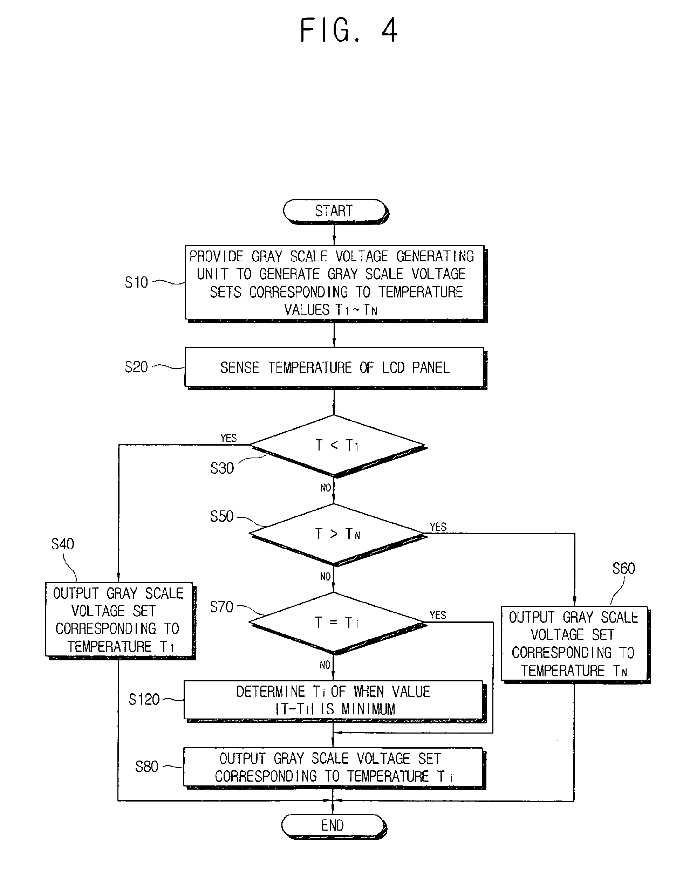

FIG. 3 is a control flow chart to illustrate a control method of a liquid crystal display according to a second exemplary embodiment of the present invention and FIG. 4 is a control flow chart illustrating another exemplary embodiment of a control method of an LCD according to the present invention.

A controller 20 does not have a power supply unit and does not calculate an ultimate gray scale voltage set to be output using gray scale voltages generated in the gray scale voltage generating units $U_1$ through $U_N$ as described above, but selects one of gray scale voltage generating units $U_1$ through $U_N$.

An N number of gray scale voltage generating units $U_1$ through $U_N$ are provided to generate gray scale voltage sets corresponding to temperature values of a first temperature value $T_1$ to an N-th temperature value $T_N$ (S10).

The temperature of an LCD panel 100 is sensed (S20). A determination is made whether the temperature T of the LCD panel 100 is lower than the minimum temperature $T_1$ (S30) . If the temperature T is lower than the minimum temperature $T_i$, the controller 20 controls the first gray scale voltage generating unit $U_1$ to generate a gray scale voltage set corresponding to the minimum temperature $T_1$ and outputs the gray scale voltage set to the data driving part 40 (S40).

If the sensed temperature T is not lower than the minimum temperature $T_1$, the controller 20 determines whether the sensed temperature T is higher than the maximum temperature $T_N$ (S50).

If the temperature T is higher than the maximum temperature $T_N$, the controller 20 controls the N-th gray scale voltage generating unit $U_N$ to generate a gray scale voltage set corresponding to the maximum temperature $T_N$ and outputs the gray scale voltage set to the data driving part 40 (S60).

When the sensed temperature T is within a range between the minimum temperature $T_1$ and the maximum temperature $T_N$, the controller 20 determines whether the temperature $T_i$ equal to the temperature T is found within the range between the minimum temperature $T_1$ and the maximum temperature $T_N$ (S70).

If the temperature $T_i$, as equal to the temperature T, is found within the range between the minimum temperature $T_1$ and the maximum temperature $T_N$, the controller 20 selects a gray scale voltage generating unit $U_i$ corresponding to the temperature $T_i$ to generate a correspondent gray scale voltage set. Then, the controller 20 outputs the gray scale voltage set to the data driving part 40 (S80).

Alternatively, if the temperature $T_i$, as equal to the temperature T, is not found within the range, the controller 20 determines $T_i$ of when a value of $|T - T_i|$ (e.g., an absolute value of the difference between the sensed temperature T and $T_i$)is minimum (S120), and outputs a gray scale voltage set corresponding to the temperature $T_i$ to the data driving part 40 (S80).

In the illustrated embodiments, the LCD has a relatively less complicated control flow than other LCD's and may generate a gray scale voltage set with a simplified method.

The illustrated embodiments, provide an LCD which generates a suitable gray scale voltage for temperature and a control method of the same.

Although a few embodiments of the present invention have been shown and described, it will be appreciated by those skilled in the art that changes may be made in these embodiments without departing from the principles and spirit of the invention, the scope of which is defined in the appended claims and their equivalents.

**Claims**

1.  A liquid crystal display comprising:

    a liquid crystal panel;
    a temperature sensor sensing a temperature T of the liquid crystal panel;
    a gray scale voltage generating part comprising a plurality of gray scale voltage generating units each generating a first gray scale voltage set corresponding to a preset temperature; and
    a controller generating a second gray scale voltage set corresponding to the sensed temperature T using the first gray scale voltage sets when the sensed temperature T does not correspond to the preset temperature.

2.  The liquid crystal display according to claim 1, wherein the gray scale voltage generating part further comprises an N number of the gray scale voltage generating units corresponding to a first temperature $T_1$ through an N-th temperature $T_N$, respectively, and each of the first gray scale voltage sets comprises a plurality of gray scale voltages, and wherein when a temperature $T_i$ is in a range between the first temperature $T_1$ and the N-th temperature $T_N$ and the sensed temperature T satisfies $T_i < T < T_{i+1}$, the controller calculates a k-th gray scale voltage V(k, T) corresponding to the temperature T by the following equation:

$$V(k,T) = V(k,T_i) + \frac{V(k,T_{i+1}) - V(k,T_i)}{T_{i+1} - T_i}\left(T - T_i\right)$$

    where V(k, Ti+1) is a k-th gray scale voltage corresponding to the temperature Ti+1 and V(k, Ti) is a k-th gray scale voltage corresponding to the temperature Ti.

3.  The liquid crystal display according to claim 1,
    wherein the gray scale voltage generating part further comprises an N number of the gray scale voltage generating units corresponding to a first temperature $T_1$ through an N-th temperature $T_N$, respectively, and each of the first gray scale voltage sets comprises a plurality of gray scale voltages, and the controller outputs the second gray scale voltage set corresponding to the first temperature $T_1$ when the sensed temperature T satisfies $T < T_1$.

4.  The liquid crystal display according to claim 1,
    wherein the gray scale voltage generating part further comprises an N number of the gray scale voltage generating units corresponding to a first temperature $T_1$ through an N-th temperature $T_N$, respectively, and each of the first gray scale voltage sets comprises a plurality of gray scale voltages, and the controller outputs the second gray scale voltage set corresponding to the N-th temperature $T_N$ when the sensed temperature T satisfies $T > T_N$.

5.  The liquid crystal display according to claim 1,
    wherein the gray scale voltage generating units each comprise a variable resistor logic part used to generate the first gray scale voltage set.

6.  The liquid crystal display according to claim 1, further comprising a data driving part generating a data voltage based on the second gray scale voltage set,
    the controller outputting the second gray scale voltage set corresponding to the sensed temperature T to the data driving part.

7.  A liquid crystal display comprising:

    a liquid crystal panel;
    a temperature sensor sensing a temperature T of the liquid crystal panel;
    a gray scale voltage generating part comprising a plurality of gray scale voltage generating units each generating a gray scale voltage set corresponding to a preset temperature; and
    a controller controlling the gray scale voltage generating part and selecting the gray scale voltage set corresponding to the preset temperature having a minimum difference from the sensed temperature T when the sensed temperature T does not correspond to the preset temperature.

**8.** The liquid crystal display according to claim 7,
wherein the gray scale voltage generating units each comprise a variable resistor logic part used to generate a plurality of gray scale voltages.

**9.** The liquid crystal display according to claim 8,
wherein the gray scale voltage generating part further comprises an N number of the gray scale voltage generating units corresponding to a temperature $T_1$ through a temperature $T_N$, and
the controller controls the gray scale voltage generating part and outputs the gray scale voltage set corresponding to the first temperature $T_1$ when the sensed temperature T satisfies $T < T_1$.

**10.** The liquid crystal display according to claim 8,
wherein the gray scale voltage generating part further comprises an N number of the gray scale voltage generating units corresponding to a temperature $T_1$ through a temperature $T_N$, and
the controller controls the gray scale voltage generating part and outputs the gray scale voltage set corresponding to the N-th temperature $T_N$ when the sensed temperature T satisfies $T > T_N$.

**11.** A control method of a liquid crystal display, the control method comprising:

generating first gray voltage sets corresponding to a first temperature $T_1$ through an N-th temperature $T_N$; respectively;
sensing a temperature T of the liquid crystal panel; and
generating a second gray scale voltage set corresponding to the sensed temperature T using the first gray scale voltage sets when the sensed temperature T is not between the first temperature $T_1$ and the N-th temperature $T_N$.

**12.** The control method according to claim 11, wherein the generating first gray scale voltage set comprises generating a plurality of gray scale voltages, and
wherein the generating a second gray scale voltage set comprises when a temperature $T_i$ is in a range between the first temperature $T_1$ and the N-th temperature $T_N$ and the sensed temperature T satisfies $T_i < T < T_{i+1}$, calculating a k-th gray scale voltage V(k, T) corresponding to the temperature T by the following equation:

$$V(k,T) = V(k,T_i) + \frac{V(k,T_{i+1}) - V(k,T_i)}{T_{i+1} - T_i}\left(T - T_i\right)$$

where V(k, Ti+1) is a k-th gray scale voltage corresponding to the temperature Ti+1 and V(k, Ti) is a k-th gray scale voltage corresponding to the temperature Ti.

**13.** The control method according to claim 11, wherein the second gray scale voltage set corresponds to the first temperature $T_1$ when the sensed temperature T satisfies $T < T_i$.

**14.** The control method according to claim 11, wherein the gray scale voltage set corresponds to the N-th temperature $T_N$ when the sensed temperature T satisfies $T > T_N$.

**15.** A control method of a liquid crystal display, the control method comprising:

generating gray voltage sets corresponding to a first temperature $T_1$ through an N-th temperature $T_N$, respectively;
sensing a temperature T of the liquid crystal panel; and
selecting the gray scale voltage set corresponding to a temperature between the first temperature $T_1$ and the N-th temperature $T_N$ having a minimum difference from the sensed temperature T when the sensed temperature is higher than the first temperature $T_1$ or lower than the N-th temperature $T_N$.

**16.** The control method according to claim 15, wherein the selected gray scale voltage set corresponds to the first

temperature $T_1$ when the sensed temperature T satisfies $T < T_1$.

**17.** The control method according to claim 15, wherein the selected gray scale voltage set corresponds to the N-th temperature $T_N$ when the sensed temperature T satisfies $T > T_N$.

**18.** A liquid crystal display comprising:

a liquid crystal panel;
a temperature sensor sensing a temperature T of the liquid crystal panel;
a gray scale voltage generating part comprising a plurality of gray scale voltage generating units, each generating a gray scale voltage set corresponding to a preset temperature range; and
a controller controlling the gray scale voltage generating part and selecting the gray scale voltage set having the preset temperature range to which the sensed temperature corresponds.

# FIG. 1

# FIG. 2

START

S10 — PROVIDE GRAY SCALE VOLTAGE GENERATING UNIT TO GENERATE GRAY SCALE VOLTAGE SETS CORRESPONDING TO TEMPERATURE VALUES $T_1 \sim T_N$

S20 — SENSE TEMPERATURE OF LCD PANEL

S30 — $T < T_1$
YES

S50 — $T > T_N$
YES

S60 — OUTPUT GRAY SCALE VOLTAGE SET CORRESPONDING TO TEMPERATURE $T_N$

S40 — OUTPUT GRAY SCALE VOLTAGE SET CORRESPONDING TO TEMPERATURE $T_1$

S70 — $T = T_i$
YES

S80 — OUTPUT GRAY SCALE VOLTAGE SET CORRESPONDING TO TEMPERATURE $T_i$

S90 — GENERATE GRAY SCALE VOLTAGE SET CORRESPONDING TO TEMPERATURE $T_i$ AND $T_{i+1}$ IN '$T_i < T < T_{i+1}$'

S100 — CALCULATE GRAY SCALE VOLTAGE SET CORRESPONDING TO TEMPERATURE T

$$V(k,T) = V(k,T_i) + \frac{V(k,T_{i+1}) - V(k,T_i)}{T_{i+1} - T_i}(T-T_i)$$

$V(k,T)$ : $k^{th}$ GRAY SCALE VOLTAGE CORRESPONDING TO TEMPERATURE T

S110 — OUTPUT $V(k,T)$

END

# FIG. 3

EP 1 860 638 A1

# FIG. 4

START

S10 — PROVIDE GRAY SCALE VOLTAGE GENERATING UNIT TO GENERATE GRAY SCALE VOLTAGE SETS CORRESPONDING TO TEMPERATURE VALUES $T_1 \sim T_N$

S20 — SENSE TEMPERATURE OF LCD PANEL

S30 — $T < T_1$

YES

NO

S50 — $T > T_N$

YES

NO

S40 — OUTPUT GRAY SCALE VOLTAGE SET CORRESPONDING TO TEMPERATURE $T_1$

S70 — $T = T_i$

YES

NO

S60 — OUTPUT GRAY SCALE VOLTAGE SET CORRESPONDING TO TEMPERATURE $T_N$

S120 — DETERMINE $T_i$ OF WHEN VALUE $|T-T_i|$ IS MINIMUM

S80 — OUTPUT GRAY SCALE VOLTAGE SET CORRESPONDING TO TEMPERATURE $T_i$

END

European Patent
Office

**EUROPEAN SEARCH REPORT**

Application Number

EP 07 00 8987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/09269 A (SILICON IMAGE INC [US]) 5 March 1998 (1998-03-05) * page 9, line 5 - line 10 * * page 11, line 3 - line 11 * * page 15, line 9 - line 15 * * figure 3A * * figure 4B * * figure 7A *  ----- | 1,3-11, 13-18 | INV. G09G3/36 |
| X | US 2006/097969 A1 (TSAI YAO-JEN [TW] ET AL) 11 May 2006 (2006-05-11) * paragraph [0016] * * paragraph [0018] * * paragraph [0020] - paragraph [0022] * * claim 14 * * figure 3 * * figure 4 *  ----- | 1 | |
| A | US 5 198 747 A (HAIGHT MICHAEL H [US]) 30 March 1993 (1993-03-30) * column 2, line 22 - line 38 *  ----- | 1,3-11, 13-18 | |
| A | US 2002/063666 A1 (KANG SIN HO [KR] ET AL) 30 May 2002 (2002-05-30) * figure 15 * * paragraph [0073] * * claims 23,24 *  ----- | 1,7,11, 15,18 | TECHNICAL FIELDS SEARCHED (IPC) G09G G02F |
| A | US 5 532 718 A (ISHIMARU YOSHIYUKI [JP]) 2 July 1996 (1996-07-02) * figures 2,4-6,8 * * column 10, line 32 - column 11, line 24 *  ----- | 1,7,11, 15,18 | |
| A | US 2006/007207 A1 (KAWAGUCHI SEIJI [JP]) 12 January 2006 (2006-01-12) * figures 9-11 * * paragraph [0119] - paragraph [0168] *  ----- | 1,7,11, 15,18 | |

The present search report has been drawn up for all claims

| Place of search | Date of completion of the search | Examiner |
|---|---|---|
| The Hague | 19 July 2007 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 8987

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2007

| Patent document cited in search report | | Publication date | Patent family member(s) | | Publication date |
|---|---|---|---|---|---|
| WO 9809269 | A | 05-03-1998 | AU | 4167097 A | 19-03-1998 |
| | | | CA | 2264786 A1 | 05-03-1998 |
| | | | DE | 69711095 D1 | 18-04-2002 |
| | | | DE | 69711095 T2 | 02-10-2002 |
| | | | DK | 978115 T3 | 01-07-2002 |
| | | | EP | 0978115 A1 | 09-02-2000 |
| | | | JP | 3516268 B2 | 05-04-2004 |
| | | | JP | 2002509621 T | 26-03-2002 |
| | | | US | 6100879 A | 08-08-2000 |
| US 2006097969 | A1 | 11-05-2006 | NONE | | |
| US 5198747 | A | 30-03-1993 | NONE | | |
| US 2002063666 | A1 | 30-05-2002 | JP | 2002123232 A | 26-04-2002 |
| US 5532718 | A | 02-07-1996 | NONE | | |
| US 2006007207 | A1 | 12-01-2006 | CN | 1677474 A | 05-10-2005 |
| | | | KR | 20060045437 A | 17-05-2006 |

EPO FORM P0459

For more details about this annex : see Official Journal of the European Patent Office, No. 12/82